# EUROPEAN PATENT APPLICATION

(11) **EP 1 862 529 A2**
(43) Date of publication of application: **05.12.2007**
(21) Application number: 07104391.3
(22) Date of filing: 19.03.2007
(51) Int. Cl.: C10L 10/00, F22B 1/18, F23C 1/00, F23C 9/06, F23C 9/08, F23K 5/00, F01K 23/10

(54) **Hydrogen blended combustion system with flue gas recirculation**

(30) Priority: 27.11.2006 US 563344; 30.03.2006 US 787435 P
(71) Applicant: L'AIR LIQUIDE, SOCIETE ANONYME POUR L'ETUDE ET L'EXPLOITATION DES PROCEDES GEORGES CLAUDE, 75007 Paris (FR)
(72) Inventor: Tailai, Hu, Greenville, IL 29615 (US); Pranda, Pavol, Hockessin, DE 19707 (US); Yuan, Quan, Mt Prospect, IL 60056 (US)
(74) Representative: Conan, Philippe Claude

(57) **Abstract**

A combined cycle power plant with flue gas recirculation (113) that utilizes a blend of fuels containing hydrogen (108), to provide improved thermal efficiency and improved flame stability at high flue gas recirculation rates.

## Description

This application claims the benefit of U.S. Provisional Application No. 60/787,435, filed March 30, 2006, the entire contents of which are incorporated herein by reference.
The generation of electric power can be a challenging endeavor, often requiring the production of varying amounts of power during different times of day, seasons, or local load fluctuations. In contrast, it is well understood that the optimum efficiencies are typically achieved by operating at steady state, or near-steady state conditions. Thus, peak efficiency, and such a varying load, are often not compatible with these widely varying demands. This problem can be addressed by providing various combinations of plants that are either on standby or running. Even if those that are running are not as efficient, if they are providing a smaller portion of the overall electrical load to the system. Gas turbines are well suited for these "peaking" applications because of the ease with which they can be brought on-line.

Combined cycle power generation plants meet the needs of increased efficiency and flexibility because they blend the best features of peaking and base-load generation by combining a steam turbine system with one or more gas turbines. As previously mentioned, gas turbines have short start up times and respond well to changes in power demands. Gas turbines are, however, relatively inefficient for power generation in simple cycle applications. In contrast, steam turbines are not well-suited for fast start up and for response to varying demand. Combined cycle plants can achieve better efficiencies by utilizing the waste heat from the exhaust of gas turbines to generate steam for the steam turbine, and are among the most efficient means available for producing electricity.

The overall efficiency of gas turbines is a function of the compressor and turbine efficiencies, ambient air temperature, turbine inlet temperature, overall pressure ratio, and the type of cycle used. Certain of these conditions are not controllable by the plant design or operation, but are determined by the equipment design. However, it is possible to control the temperature of the gas entering the combustor. The higher this temperature, the higher the efficiency of the turbine cycle. Thus, it is one object of the present invention to increase the temperature of the gas entering the combustor.

A cogeneration plant can be operated with gas turbine on or off. When gas turbine is in operation, high temperature exhaust gas from gas turbine is fed into heat recovery steam generator. The energy contained in the gas turbine exhaust gas is recovered in heat exchangers to produce steam for either processing (i.e. a cogeneration cycle), or for driving a steam turbine (i.e. a combined cycle). When the gas turbine is off, a diverter damper can by-pass exhaust gas to a by-pass stack, which prevents any air from leaking into gas turbine when fresh air fan is running.

A cogeneration plant may be operated with the gas turbine off, by incorporating an auxiliary fan to provide an air flow through the heat recovery boiler. Such a system is known in the art as operating in Fresh Air mode, or alternately Fresh Air Firing mode. Operating a cogeneration system under such a Fresh Air mode gives the operator the flexibility of being able to separate the production of electricity from the production of the steam. This is particularly interesting in the regions where power market is deregulated and power prices fluctuate over time. In such a region, there is a decoupling of steam demand and desired electrical power output.

To improve the efficiency under Fresh Air mode for a new cogeneration system, two types of technologies can be used; flue gas recirculation, and a boiler with a combustion chamber. For an existing cogeneration unit, flue gas recirculation will almost always be a far easier and cheaper technology for retrofit.

Generally, a higher recirculation rate of flue gas can yield less stack loss and improve the efficiency of a cogeneration system, and also reduce emissions. However, with the increase of the recirculation rate of flue gas, oxygen concentration at the upstream of the burner drops. Excessive CO emission and combustion stability appears to be another concern. Thus, maintaining an efficient and stable combustion at the high recirculation rates of flue gas is problematic.

Thus, there is a need in the industry for a system that can be retrofitted into existing combined cycle, or cogeneration plants, that will improve the thermodynamic efficiency, without effecting flame stability and increasing emissions.

The present invention is directed toward a combined cycle power plant that has a gas turbine and a heat recovery stream generator. The heat recovery steam generator generates a flue gas. A portion of this flue gas is blended with the exhaust gas from the gas turbine, and admitted into the duct burner of the heat recovery steam generator, where it serves as the combustion oxidant. A blended fuel is provided to the duct burner in order to promote combustion. The blended fuel may be natural gas and hydrogen.

The present invention is also directed toward a method of increasing the efficiency of a combined cycle power plant that has a gas turbine and a heat recovery steam generator. The flue gas from a heat recovery stream generator is mixed with the exhaust from the associated gas turbine to form a mixed exhaust stream. This mixed exhaust stream, along with a blended fuel stream, is introduced into a duct burner of said heat recovery steam generator.

The present invention is also directed toward a combined cycle power plant that has a gas turbine and a heat recovery stream generator. The exhaust from the gas turbine is directed out of the system by means of a diverter valve and a bypass stack. The heat recovery steam generator generates a flue gas. A portion of this flue gas is blended with air, and admitted into the duct burner of the heat recovery steam generator, where it serves as the combustion oxidant. A blended fuel is provided to the duct burner in order to promote combustion.

The present invention is also directed toward a combined cycle power plant that has a gas turbine and a heat recovery stream generator. The gas turbine is off-line. The heat recovery steam generator generates a flue gas. A portion of this flue gas is blended with air, and admitted into the duct burner of the heat recovery steam generator, where it serves as the combustion oxidant. A blended fuel is provided to the duct burner in order to promote combustion.

For a further understanding of the nature and objects for the present invention, reference should be made to the following detailed description, taken in conjunction with the accompanying drawings, in which like elements are given the same or analogous reference numbers and wherein:
- Figure 1 is a schematic illustration of one embodiment in accordance with the present invention; and
- Figure 2 is a schematic illustration of a the duct burner as positioned in the transition duct between the gas turbine and the heat recovery stream generator, in accordance with one embodiment the present invention.

A cogeneration unit with flue gas recirculation can be continuously operated under Fresh Air mode for a long period with a competitive efficiency that is roughly comparable to the typical value for a conventional boiler. While keeping the total flow of flue gas that exits the stack virtually constant, an increase in flue gas recirculation rate yields less stack loss and reduces emissions. However, with the increase of the flue gas recirculation rate, the oxygen content to the inlet of duct burners can easily decrease to a level that causes excessive CO emission and result in combustion instability. To overcome this difficulty, a practical solution is to add a more reactive fuel, such as hydrogen, to the main fuel (typically natural gas). A system that utilizes a fuel blended with hydrogen in the combustion system can be used to maintain an efficient and stable combustion in heat recovery steam generator. Such a system will also reduce emissions at these high flue gas recirculation rates. In addition, the use of hydrogen as part of the fuel blend, the greenhouse gas (CO₂) production is reduced. Therefore, this solution can serve as a transition strategy to a carbon free energy system at some point in the future.

A hydrogen fuel blend combustion system is proposed to solve the problem of combustion instability and to improve the efficiency of a cogeneration system at a high flue gas recirculation rate. In this solution, the fresh air is mixed with a part of the total flue gas and then this mixture is recycled back to the inlet duct of Heat Recovery Steam Generator. The more reactive fuel, such as hydrogen (or hydrogen/CO), is blended with the primary fuel, or fuels, and then the blended fuel is injected into combustion chamber. In one embodiment, a stable and efficient combustion can be maintained when a large portion of flue gas is recycled, and the emissions (NOx and CO) are also reduced to the required regulation levels at the same time.

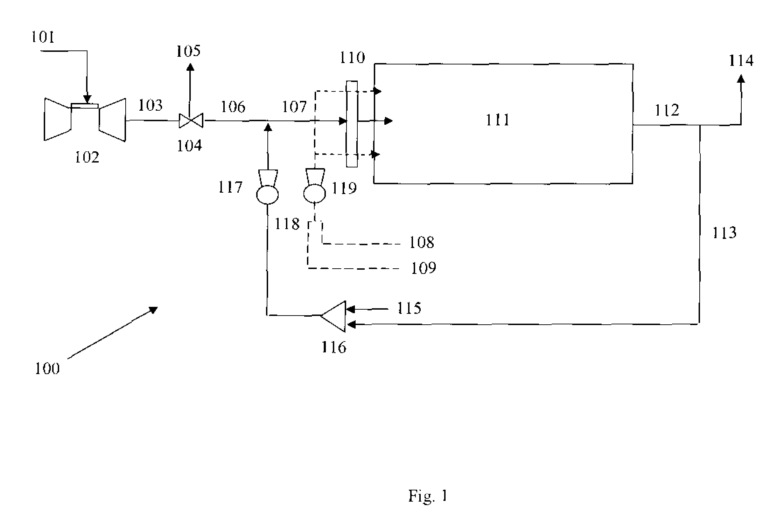

Turning to Figure 1, schematic diagram **100,** which represents a cogeneration system utilizing a hydrogen blended combustion system is shown.

For a cogeneration unit that is operating in Gas Turbine mode (i.e. with the gas turbine on), primary gas turbine fuel **101** is injected into gas turbine **102** and the high temperature exhaust gas **103** exits the gas turbine **102.** When operating in the Gas Turbine mode, the damper **104** remains open, and all the exhaust gas **103** is directed toward the heat recovery steam generator **111,** where this heat content is exploited to produce steam. The damper **104** and by-pass stack **105** will be used during the switching period between Gas Turbine mode and Fresh Air mode (i.e. when the gas turbine is off). When operating in Fresh Air mode, fresh air **115** is fed into the heat recovery steam generator 111 and the damper 104 can prevent air from leaking into the gas turbine ducting.

Hydrogen fuel 108 may be blended with primary HRSG fuel 109, and then burned in duct burner 110. As the exhaust gas 112 exits the heat recovery steam generator 111, instead of being completely exhausted into main stack 114, a portion of the flue gas 113 is recycled back to displace an equivalent volume of fresh air 115.

The hydrogen (or hydrogen/CO) blended fuel 118 may go through a fan 119 to increase the pressure for better injection and mixing. After being burned in duct burner 110, the heated gas stream enters heat recovery steam generator 111, where it mixes with gas turbine exhaust gas 103. The velocity with which blended fuels 118 are introduced into the duct burner 110 depends on the structure of duct burner, the size and the geometry of the combustion zone of the heat recovery steam generator, the velocity and the temperature of combustion gases, and the structure of heat recovery steam generator.

For a cogeneration unit that is operating in Fresh Air mode (i.e. with the gas turbine off), the damper 104 will be closed. When operating in Fresh Air mode, fresh air 115 is fed into the heat recovery steam generator 111 and the damper 104 can prevent air from leaking into the gas turbine ducting. Fresh air 115, and the recirculated flue gas to be discussed below, may go through a fan 117 to increase the pressure as needed.

Hydrogen fuel 108 may be blended with primary HRSG fuel 109, and then burned in duct burner 110. As the exhaust gas 112 exits the heat recovery steam generator **111,** instead of being completely exhausted into main stack **114,** a portion of the flue gas **113** is recycled back to displace an equivalent volume of fresh air **115.**

The hydrogen (or hydrogen/CO) blended fuel **118** may go through a fan **119** to increase the pressure for better injection and mixing. After being burned in duct burner **110,** the heated gas stream enters heat recovery steam generator **111,** where it mixes with gas turbine exhaust gas **103.** The velocity with which blended fuels **118** are introduced into the duct burner **110** depends on the structure of duct burner, the size and the geometry of the combustion zone of the heat recovery steam generator, the velocity and the temperature of combustion gases, and the structure of heat recovery steam generator.

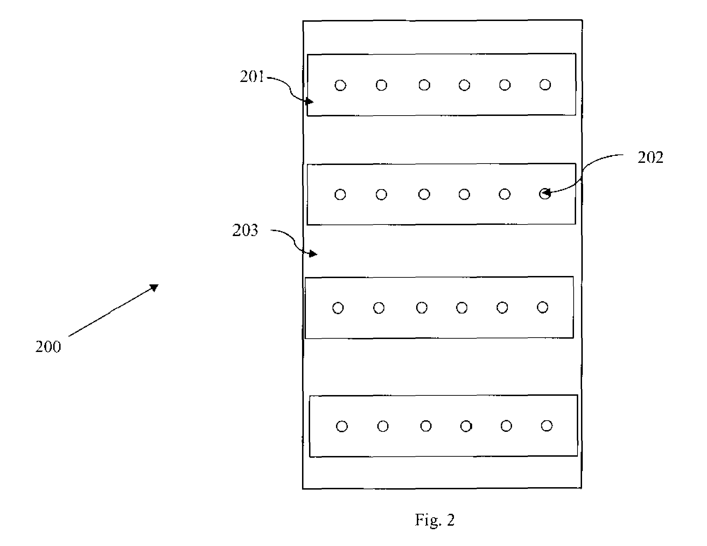

A cross section **200** of duct burner **110,** as it is positioned within the transition duct between gas turbine **102** and heat recovery steam generator **111** is shown in Figure 2. A portion of cross section **200** is occupied by the rows of duct burner **201.** The mixture of air and flue gas **107** passes through the remaining portion of the cross section **203.** The blended fuels **118** are injected through fuel nozzles **202.** The optimal air/fuel ratio, velocity ratio and the turbulent intensities (of the blended fuels **118** and/or the mixture of air/flue gas **107**) are dependent on the configuration of the cogeneration system.

The advantages of this solution the ability to maintain an efficient and stable combustion, to reduce emissions (CO, NOₓ), to reduce greenhouse gas (CO₂), and also to improve the efficiency of the cogeneration system at a high recirculation rate of flue gas. The addition of hydrogen (or hydrogen/CO) to natural gas with Flue Gas Recirculation has the benefits of increasing flame speed, extending the limit of flammability, lowering ignition energy, enhancing flame stability, and reducing emissions. One skilled in the art will be able to determine the percentage of hydrogen that needs to be added, as it is dependent upon on the specific system and operating conditions of the particular cogeneration plant.

As shown in Table 1, with the increase of the percentage of the recirculated flue gas, the thermal efficiency of the heat recovery steam generator increases. Simultaneously, the oxygen content to the burner decreases with an increase of flue gas recirculation rate. When a hydrogen-blended combustion system is used, a stable and efficient combustion can be maintained even if the oxygen content of the mixed gas of air/flue gas 107 at the upstream of the burners drops to a level that is not acceptable for a stable combustion. The last three rows of Table 1 generally represent cases in which a hydrogen-blended combustion system may be needed. The percentages of the blended hydrogen fuel depend on the oxygen content of the mixed gas of air/flue gas **107** at the upstream of the burners and several other factors (such as the structure of duct burner, the size and the geometries of the combustion chamber, the velocity and the temperature of combustion gases). It is anticipated that a hydrogen fuel ratio of up to 20% is desirable for this application.

Another advantage of this solution is the ability of maintaining an efficient and stable combustion at the different recirculation rates of flue gas. Different recirculation rates give a greater flexibility to the design and operation of a cogeneration system.

Although certain embodiments of the present invention have been described herein in detail, these embodiments are meant to describe the invention and do not limit the scope of its application. Upon review of these descriptions, numerous modifications, adaptations and variation will present themselves to those of skill in the art. Thus, in order to determine the full scope of the present invention, reference should be made to the appended claims.

## Claims

1. A combined cycle power plant comprising:
a) a gas turbine, wherein said gas turbine produces an exhaust gas;
b) a heat recovery steam generator, wherein said heat recovery steam generator comprises a duct burner;
c) wherein said heat recovery steam generator generates a flue gas;
d) wherein at least a portion of said flue gas is blended with the exhaust from the gas turbine before entering said duct burner, thereby producing a blended oxidant for said duct burner, and
e) wherein a blended fuel is provided to the duct burner.

2. The power plant of claim 1, wherein said blended fuel comprises natural gas and hydrogen.

3. The power plant of claim 2, wherein said hydrogen comprises 20% of the total fuel flow rate by volume.

4. A method of increasing the efficiency of a combined cycle power plant comprising the steps of redirecting at least a portion of the flue gas from the heat recovery steam generator and mixing it with the exhaust from an associated gas turbine to form a mixed exhaust stream; introducing said mixed exhaust stream along with a blended fuel stream into a duct burner of said heat recovery steam generator.

5. The power plant of claim 4, wherein said blended fuel comprises natural gas and hydrogen.

6. The power plant of claim 5, wherein said hydrogen comprises 20% of the total fuel flow rate by volume.

7. A combined cycle power plant comprising:
a) a gas turbine, wherein said gas turbine produces an exhaust gas, and wherein said exhaust gas exists said combined cycle power plant through a diverter valve and a bypass stack;
b) heat recovery steam generator, wherein said heat recovery steam generator comprises a duct burner;
c) wherein said heat recovery steam generator generates a flue gas;
d) wherein at least a portion of said flue gas is blended with air before entering said duct burner, thereby producing a blended oxidant for said duct burner; and
e) wherein a blended fuel is provided to the duct burner.

8. The power plant of claim 7, wherein said blended fuel comprises natural gas and hydrogen.

9. The power plant of claim 8, wherein said hydrogen comprises 20% of the total fuel flow rate by volume.

10. A combined cycle power plant comprising:
a) a gas turbine, wherein said gas turbine is off-line;
b) a heat recovery steam generator, wherein said heat recovery steam generator comprises a duct burner;
c) wherein said heat recovery steam generator generates a flue gas;
d) wherein at least a portion of said flue gas is blended with air before entering said duct burner, thereby producing a blended oxidant for said duct burner; and
e) wherein a blended fuel is provided to the duct burner.

11. The power plant of claim 10, wherein said blended fuel comprises natural gas and hydrogen.

12. The power plant of claim 11, wherein said hydrogen comprises 20% of the total fuel flow rate by volume.
